# FASCICULE DE BREVET EUROPEEN

(11) **EP 0 496 674 B1**
(45) Date de publication et mention de la délivrance du brevet: **27.09.1995**
(21) Numéro de dépôt: 92400166.2
(22) Date de dépôt: 22.01.1992
(51) Int. Cl.: H04Q 11/00, H04J 14/02, H04B 10/20

(54) **Procédé et réseau de communication à allocation de fréquences**
Verfahren und Netzwerk zur Kommunikation mit Frequenzzuordnung
Procedure and communication network with frequency assignment

(30) Priorité: 24.01.1991 FR 9100794
(43) Date de publication de la demande: 29.07.1992
(73) Titulaire: ALCATEL N.V., NL-1077 XX Amsterdam (NL)
(72) Inventeur: Audouin, Olivier, F-91600 Savigny sur Orge (FR); Gabriagues, Jean-Michel, F-91530 Le Val Saint Germain (FR); Sotom, Michel, F-91140 Villebon sur Yvette (FR)
(74) Mandataire: Bourely, Paul

(56) Documents cités:
- EP-A- 0 249 112
- EP-A- 0 381 102
- IEEE JOURNAL OF LIGHTWAVE TECHNOLOGY, vol. LT-5, no. 12, décembre 1987, pages 1782-1794, IEEE, New York, US; I.M.I. HABBAB et al.: "Protocols for very high- speed optical fiber local area networks using a passive star topology"
- CONFERENCE RECORD, IEEE INTERNATIONAL CONFERENCE ON COMMUNICATIONS, Boston, MA, ,11-14 juin 1989, vol. 2, pages 722-727, IEEE, New York US; S.SUZUKI et al.:"A photonic wavelength -division switsching system using tunable laser diode filters"

## Description

La présente invention concerne notamment un réseau de communication. Dans ce réseau on réalise des communications entre des terminaux sous la forme de modulations informatives appliquées à des ondes, dites d'émission, qui parcourent des lignes de transmission reliant ces terminaux. Plusieurs ondes d'émission parcourant ensemble une même ligne de transmission, il est nécessaire, pour éviter une diaphonie, que des distances spectrales soient établies entre les fréquences d'émission correspondantes. C'est pourquoi une fréquence d'émission est allouée à chaque terminal, selon une procédure dite d'allocation de fréquences, lors de l'établissement de chacune des communications au cours desquelles ce terminal doit émettre.

Un réseau selon cette invention peut comporter certains éléments qui lui sont alors communs, quant à leurs fonctions indiquées ci-après, avec un premier réseau connu. Ces éléments incluent :
- une pluralité de terminaux associés respectivement à des utilisateurs entre lesquels des messages doivent être transmis, chacun de ces terminaux étant apte à émettre une onde d'émission à une fréquence d'émission commandée qui constitue une position de ce terminal dans un domaine spectral du réseau, ce terminal étant de plus apte à appliquer une modulation informative à cette onde pour lui faire porter un dit message,
- deux lignes de transmission qui sont associées à chacun desdits terminaux pour guider des ondes et qui constituent une ligne d'émission pour guider ladite onde d'émission de ce terminal, et une ligne de réception pour guider des ondes reçues par ce terminal,
- un coupleur en étoile pour recevoir lesdites ondes d'émission par lesdites lignes d'émission, et pour transmettre chacune de ces ondes vers tous ces terminaux par lesdites lignes de réception, de sorte que les positions des divers terminaux doivent rester à des distances mutuelles au moins égales à un incrément de fréquence prédéterminé,
- et des moyens d'allocation de fréquences pour allouer à ces terminaux des positions pour les communications auxquelles ils vont participer.

Les fréquences d'émission des divers terminaux d'un tel réseau varient au cours du temps. Mais pour éviter que ces variations fassent apparaître une diaphonie, les distances spectrales entre fréquences d'émission doivent rester au moins égales à un incrément de fréquence. Ce dernier est choisi pour réserver pour chaque communication, dans le domaine spectral du réseau, un canal de message de largeur suffisante. Ces fréquences forment donc, à partir d'une fréquence de base, une succession qui sera appelée ci-après pile et qui s'étend jusqu'à un sommet de pile. A cette succession correspond la succession des canaux de message qui comportent ces fréquences, ainsi que la succession des terminaux qui utilisent ces fréquences. Dans chacune de ces successions un élément peut, par rapport à un autre, être adjacent, c'est-à-dire précédent ou suivant. Le sommet de pile est constitué par l'une des fréquences d'émission, ou, dans le cas d'une communication réalisée sur plusieurs fréquences, par un groupe de telles fréquences qui sont utilisées pour une même communication et qui sont par exemple adjacentes, cette fréquence ou ce groupe étant le plus éloigné de la fréquence de base.

Les divers terminaux peuvent être identiques les uns aux autres. C'est pourquoi, pour faciliter la description du fonctionnement d'un tel réseau on considérera parfois ci-après plus particulièrement l'un de ces terminaux, qui peut être constitué par chacun d'entre eux et qui sera appelé "le terminal considéré".

On comprendra que le mot "onde" employé ci-dessus peut désigner des ondes ou signaux dont les fréquences peuvent être diverses, de même que leurs natures, par exemple électromagnétique ou accoustique. La présente invention concerne cependant plus particulièrement, quoique non exclusivement, le cas où lesdites ondes d'émission sont des ondes optiques et où lesdites lignes de transmission sont des fibres optiques pour guider ces ondes.

Ledit premier réseau connu est dans ce cas. Il est décrit dans un premier document antérieur constitué par le document de brevet EP-A-381 102. Ce document indique comment est établie la fréquence d'émission du terminal considéré lorsqu'il se prépare à entrer en communication. Cette fréquence est établie par un "appui". Un tel "appui" consiste en ce que le terminal considéré établit sa fréquence d'émission par rapport à une fréquence d'appui, de manière que la distance spectrale entre cette fréquence d'émission et sa fréquence d'appui soit égale au dit incrément de fréquence. Une fréquence d'appui est typiquement constituée par la fréquence d'émission d'un autre terminal.

Pour réaliser un tel appui, le terminal considéré effectue un balayage du domaine spectral du réseau. Ce balayage lui permet de repérer les fréquences d'émission possibles qui sont inoccupées et donc disponibles pour l'émission du message à transmettre. Une fréquence d'émission ainsi repérée est sélectionnée et d'abord utilisée pour envoyer une signalisation d'appel qui comporte, au moins, une adresse du terminal appelé. La durée de ce balayage augmente le temps d'accès des terminaux au réseau, c'est-à-dire le temps qui s'écoule en moyenne entre l'instant où un terminal reçoit l'utilisateur associé une instruction de transmission d'un message et l'instant où cette transmission commence.

Un deuxième réseau connu est décrit dans un deuxième document antérieur qui est un article : "Protocols for very high-speed optical fiber local area networks using a passive star topology" - (ISAM M.I. HABBAB, MOHSEN KAVEHRAD, and CARL-ERIK W. SUNDBERG - Journal of lightwave technology, vol. LT-5, N° 12. december 1987, p.1782-1793).

Le domaine spectral de ce deuxième réseau connu comporte une pluralité de canaux de message ainsi qu'un canal de signalisation dont les positions sont apparemment prédéterminées. Ce dernier canal est réservé pour la transmission de signalisations permettant notamment à un terminal appelant d'indiquer au terminal appelé un canal de message qui sera utilisé pour la communication.

La présente invention a notamment pour but de limiter le temps d'accès d'un terminal à un tel réseau.

Et, dans ce but, elle a notamment pour objet un procédé de communication à allocation de fréquences selon lequel on fournit à tous les terminaux une onde de marquage par laquelle une fréquence d'émission est marquée alors qu'aucune communication n'est en cours d'établissement, puis, lorsqu'on établit une nouvelle communication, cette fréquence marquée est allouée pour cette nouvelle communication à au moins l'un des terminaux qui doivent y participer.

Le procédé selon l'invention est mis en oeuvre conformément aux caractéristiques de la revendication 1.

Le réseau selon l'invention est réalisé conformément aux caractéristiques de la revendication 2.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures il y est désigné par le même signe de référence.

La figure 1 représente une vue d'ensemble commune, notamment, à un premier et à un deuxième réseaux donnés en exemple de mise en oeuvre de la présente invention.

La figure 2 représente le schéma par blocs d'un terminal de ce premier réseau.

La figure 3 représente le schéma par blocs d'un bloc de gestion appartenant au même réseau.

La figure 4 représente le spectre de certaines des ondes optiques présentes sur ce premier réseau.

La figure 5 représente le spectre de certaines des ondes optiques qui sont présentes sur la fibre de réception d'un terminal qui appartient à ce premier réseau.

La figure 6 représente le spectre des ondes optiques de la figure 5 après mélange de ces ondes avec les ondes optiques émises par l'émetteur de ce même terminal.

La figure 7 représente le spectre des signaux électriques résultant de la détection des ondes optiques de la figure 6 pour permettre l'asservissement de la position spectrale de l'émetteur du terminal de la figure 2.

La figure 8 représente le spectre des ondes optiques de la figure 5 après mélange de ces ondes avec l'onde optique émise par l'oscillateur local du terminal de la figure 2.

La figure 9 représente le spectre des signaux électriques résultant de la détection des ondes optiques de la figure 8 pour permettre l'asservissement de la fréquence de l'oscillateur local du terminal de la figure 2.

La figure 10 représente le schéma par blocs d'un terminal du deuxième réseau donné en exemple de mise en oeuvre de la présente invention.

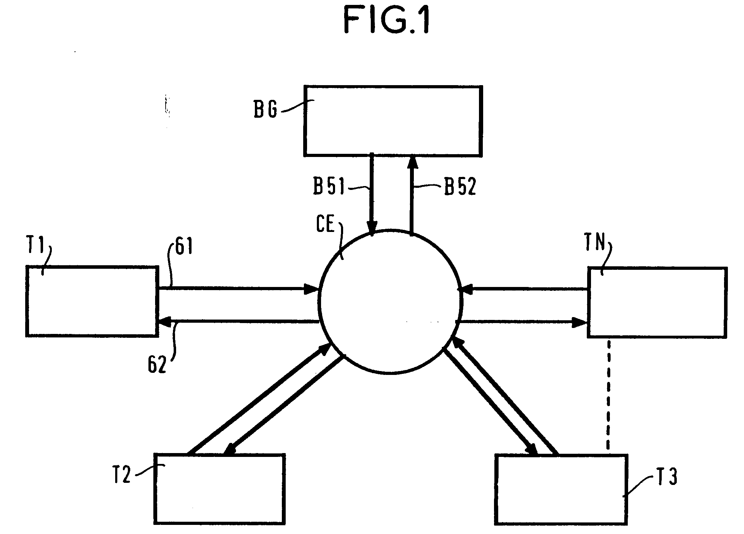

On va tout d'abord rappeler, à l'aide de la figure 1, la structure générale commune aux réseaux de ce genre. Un tel réseau comporte les élément suivants :
- une pluralité de terminaux (T1, T2, T3...TN) associés respectivement à autant d'utilisateurs entre lesquels des messages doivent être transmis,
- deux fibres optiques associées à chacun desdits terminaux (T1) pour guider des ondes optiques, ces fibres étant une fibre d'émission (61) pour guider des ondes d'émission émises à une fréquence d'émission de ce terminal, et une fibre de réception (62) pour guider des ondes qui doivent être reçues par ce terminal,
- et un coupleur en étoile (CE) pour recevoir les ondes optiques lui parvenant par lesdites fibres d'émission, et pour transmettre chacune de ces ondes optiques vers tous ces terminaux par lesdites fibres de réception.

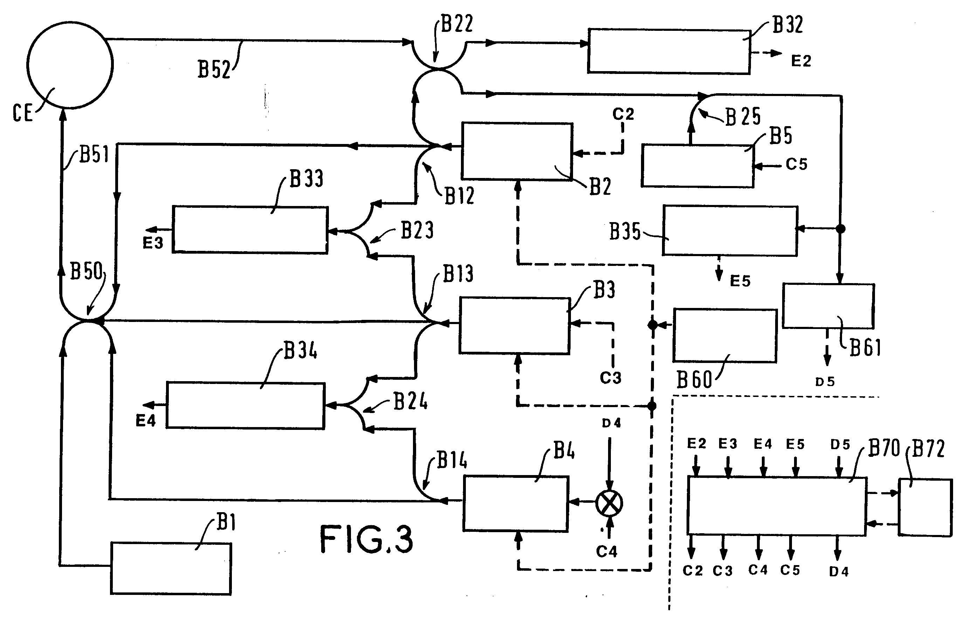

Un bloc de gestion BG comporte un générateur de base (B1) qui est représenté à la figure 3 et qui émet une onde de base de nature optique à une fréquence de base (F0) pour constituer une référence de fréquence pour la commande desdites fréquences d'émission.

Dans un tel réseau chacun des terminaux est tantôt libre, tantôt occupé. Lorsqu'il est occupé il peut être préappelant et/ou préappelé puis appelant et/ou appelé.

Un terminal est appelant et en émission lorsqu'il transmet un message à un terminal appelé sous la forme d'une modulation informative sur une onde porteuse de nature optique qui constitue une onde d'émission de ce terminal et qui est émise pendant une durée de communication. On considérera ci-après que la fréquence propre de cette onde porteuse constitue à la fois une fréquence d'émission et une position spectrale de ce terminal et une fréquence de transmission de ce message. Elle varie sur commande dans un domaine spectral du réseau. Sa position dans ce domaine peut être définie à partir de la fréquence de base. Lorsqu'on dira ci-après que cette fréquence de transmission est, à un instant donné, plus ou moins proche ou plus ou moins éloignée ou est, au cours du temps, rapprochée ou éloignée il s'agira de la proximité ou de l'éloignement de cette fréquence de transmission à partir de cette fréquence de base. Pour simplifier certaines explications on considérera parfois plus particulièrement le cas où la fréquence de base est inférieure aux fréquences d'émission, les mots tels que supérieur ou inférieur appliqués à des fréquences se référant à ce cas. Les fréquences de l'onde d'émission modulée sont comprises dans un canal de message qui est réservé, au sein du domaine spectral du réseau, pour la transmission d'un message et qui présente pour cela une largeur spectrale de message. Cette onde est reçue par le terminal appelé et constitue pour lui une onde de réception dont la fréquence propre est une fréquence de réception. Ce terminal est alors en réception. Les terminaux appelant et appelé sont appariés en formant une paire de terminaux en communication.

La communication peut être unidirectionnelle. Un seul message est alors transmis. Il l'est à partir du terminal appelant vers le terminal appelé. La communication peut aussi être bidirectionnelle. Dans ce cas elle peut être réalisée dans le mode dit "alternat". Les terminaux appelant et appelé prennent alors une même position spectrale et un même canal de message est occupé par des messages aller et retour qui se succèdent au cours du temps. Une communicatioin bidirectionnelle peut aussi être réalisée dans le mode dit "duplex". Le message précédemment mentionné constitue alors un message aller occupant un canal de message aller. Le terminal appelé est apte à émettre, en réponse à ce message et au cours de la même durée de communication, un message retour. Ce dernier est transmis au terminal appelant sur une onde optique porteuse qui occupe un canal de message retour et constitue une onde d'émission pour le terminal appelé et une onde de réception pour le terminal appelant. L'ensemble des deux canaux de message aller et retour constitue une communication.

Un terminal libre devient préappelant lorsque, en réponse à un ordre de l'utilisateur qui lui est associé, il prépare ou émet une signalisation d'appel comportant l'adresse d'un terminal préappelé en vue de la réalisation prochaine d'une communication au cours de laquelle ces terminaux préappelant et préappelé seront appelant et appelé, respectivement.

On va maintenant énoncer de manière générale diverses dispositions qui ont été trouvées avantageuses, notamment selon la présente invention, pour la réalisation de réseaux de ce genre. Ces dispositions sont adoptées dans les deux réseaux donnés en exemple et seront mieux comprises lorsque ces réseaux seront ensuite décrits de manière plus concrète.

Les terminaux du réseau sont semblables les uns aux autres. C'est pourquoi on va d'abord considérer un seul d'entre eux pour préciser sa structure interne. Selon une disposition commune au premier réseau connu précédemment mentionné et aux deux réseaux donnés en exemple de mise en oeuvre de la présente invention, le terminal considéré comporte les éléments suivants :
- Un émetteur (1) commandable au moins en fréquence pour émettre ladite onde d'émission et pour appliquer une modulation informative à cette onde.
- Des moyens de positionnement d'émission pour positionner la fréquence d'émission de cet émetteur dans un domaine spectral du réseau, en formant une pile de fréquences d'émission qui sont variables et qui se succèdent à partir d'une fréquence de base fixe jusqu'à un sommet de pile en étant séparées les unes des autres par des distances spectrales au moins égales à un incrément de fréquence prédéterminé.
- Des moyens de réception pour démoduler certaines des ondes reçues par le terminal considéré.
- Et un circuit de commande (40) pour commander cet émetteur, ces moyens de positionnement d'émission et ces moyens de réception.

Les moyens de positionnement d'émission des terminaux sont tels que leurs fréquences d'émission forment une succession de fréquences à intervalles bornés inférieurement dans laquelle chaque fréquence suivante est séparée d'une fréquence précédente par une distance interterminaux quine peut pas descendre sensiblement au-dessous d'un incrément de fréquence prédéterminé (DF) supérieur à ladite largeur spectrale de message. C'est pourquoi ceux du terminal considéré comportent des moyens d'appui d'émission comportant eux-mêmes les éléments suivants :
- Un mélangeur de positionnement d'émission (31) pour mélanger les ondes reçues par le terminal considéré avec une onde locale de positionnement d'émission qui a une fréquence locale de positionnement d'émission (F(2P-1)A) dans le domaine optique et qui est fournie sur une entrée locale (31A) de ce mélangeur à partir de l'émetteur (1) de ce terminal pour représenter sa fréquence d'émission (F(2P-1)).
- Un détecteur de positionnement d'émission (10) alimenté par ledit mélangeur de positionnement d'émission pour former des signaux de battement de nature électrique résultant chacun du mélange de ladite onde locale de positionnement d'émission avec l'une desdites ondes reçues qui correspond à ce signal, l'un au moins de ces signaux constituant un signal de battement de positionnement d'émission (F(2P-2)BE) si celle desdites ondes reçues qui lui correspond , constitue une onde externe de positionnement d'émission (F(2P-2)B) définissant une fréquence d'appui (F(2P-2) du terminal considéré, la fréquence de ce signal constituant une fréquence de battement de positionnement d'émission (F(2P-1)A-F(2P-2)B) qui définit une distance d'appui (F(2P-1)-F(2P-2)) entre ces fréquences d'émission (F(2P-1)) et d'appui (F(2P-2)), une dite onde reçue ne constituant cette onde externe de positionnement que si cette distance d'appui est située dans un intervalle d'appui prédéterminé comportant ledit incrément de fréquence (DF).
- Un discriminateur de position d'émission (11) pour recevoir ledit signal de battement de position d'émission et fournir en réponse un signal de position d'émission représentatif d'un écart de position d'émission égal à la différence entre ladite fréquence de battement de positionnement d'émission (F(2P-1)A-F(2P-2)B) et une fréquence de consigne de positionnement d'émission (DF-2FS) telle que l'annulation de cet écart implique que la différence entre lesdites fréquences d'émission (F(2P-1)) et d'appui (F(2P-2)) du terminal considéré soit égale au dit incrément de fréquence (DF).
- Et des moyens de commande de position d'émission (40) qui commandent ladite fréquence d'émission de ce terminal en réponse audit signal d'écart de position d'émission pour rendre ladite fréquence de battement de positionnement d'émission égale à ladite fréquence de consigne de positionnement d'émission.

Si le terminal considéré est à des distances spectrales à peu près égales à l'incrément DF en même temps d'un terminal précédent et d'un terminal suivant, le détecteur 10 fournit deux signaux de battement de positionnement d'émission.

C'est pourquoi, selon une disposition avantageuse, le discriminateur de position d'émission (11) comporte un filtre de positionnement d'émission pour sélectionner et superposer deux dits signaux de battement de positionnement d'émission, ce filtre présentant une fréquence propre égale à ladite fréquence de consigne de positionnement d'émission et une bande passante étroite centrée sur cette fréquence, ledit signal de position d'émission étant représentatif de la puissance du signal de sortie de ce filtre, et lesdits moyens de commande de position d'émission (40) commandant ladite fréquence d'émission (F(2P-1)) de ce terminal pour rendre cette amplitude maximale.

Les moyens de réception peuvent être du type hétérodyne et comporter les éléments suivants :
- Un oscillateur local (2) pour fournir une onde locale de réception qui est de nature optique et dont la fréquence est commandable et constitue une fréquence locale de réception (L(2P-1)) du terminal considéré.
- Un mélangeur d'hétérodynage (32) recevant d'une part lesdites ondes reçues par le terminal considéré, une telle onde constituant une dite onde de réception ayant une dite fréquence de réception (F(2p)) pour le terminal considéré lorsque le message porté par cette onde est à transmettre à ce terminal, ce mélangeur recevant d'autre part ladite onde locale de réception et mélangeant cette onde avec lesdites ondes reçues.
- Un détecteur d'hétérodynage (20) alimenté par ledit mélangeur d'hétérodynage pour fournir des signaux de battement de nature électrique dont l'un est un signal de battement de réception (K(2P)H) présentant une fréquence de battement de réception qui est la différence entre lesdites fréquences de réception et locale de réception et qui est voisine d'une fréquence intermédiaire prédéterminée (FI).
- Un filtre de démodulation (22) pour recevoir ce signal de battement de réception, pour le démoduler, et pour fournir un signal démodulé représentatif d'une dite information qui était à transmettre au terminal considéré et qui était portée par ladite onde de réception.
- Un discriminateur de fréquence constituant un discriminateur de position de réception (21) pour recevoir ce signal de battement de réception et pour fournir en réponse un signal d'erreur de position de réception représentatif de la différence entre ladite fréquence de battement de réception et ladite fréquence intermédiaire (FI).
- Et des moyens de commande de position de réception (40) qui commandent ladite fréquence locale de réception en réponse au dit signal d'erreur de position de réception pour rendre ladite fréquence de battement de réception égale à ladite fréquence intermédiaire.

Le circuit de commande du terminal considéré est relié à l'utilisateur associé à ce terminal pour en recevoir un message à transmettre. Il comporte des moyens de modulation qui commandent en conséquence l'émetteur de ce terminal pour réaliser ladite modulation informative de l'onde d'émission lorsque le terminal considéré est en émission. Il comporte lesdits moyens de commande de position d'émission. Il reçoit ledit signal démodulé et comporte des moyens de reconnaissance d'adresse pour reconnaître l'adresse du terminal considéré. Il place ce terminal en réception lorsque cette adresse a été reconnue et transmet ensuite le message reçu à l'utilisateur associé. Il reçoit ledit signal de battement de réception et comporte lesdits moyens de commande de position de réception.

Le terminal considéré est de plus, apte à émettre et à recevoir des signalisations ayant la forme de modulations affectant des ondes porteuses optiques qui sont guidées par lesdites fibres d'émission et de réception de ce terminal et qui sont transmises par ledit coupleur en étoile. Ces signalisations comportent une signalisation d'appel qui est émise par ce terminal lorsqu'il est préappelant et qui comporte l'adresse du terminal préappelé.

Selon une disposition avantageuse dite de compression de pile, le circuit de commande du terminal considéré est prêt de manière permanente, c'est-à-dire pendant toute la durée de communication, à faire varier la fréquence d'émission de ce terminal.

Une telle variation est effectuée si une fréquence d'appui inférieur de ce terminal qui sera définie ci-après se rapproche de la fréquence de base. Dans ce cas la fréquence d'émission du terminal considéré accompagne le déplacement de cette fréquence d'appui. Une telle variation est aussi effectuée si une telle fréquence d'appui inférieur antérieurement utilisée disparait. Dans ce cas la fréquence d'émission se rapproche progressivement de la fréquence de base jusqu'à ce qu'une nouvelle fréquence d'appui inférieur puisse être définie. Cette nouvelle fréquence d'appui inférieur peut être la fréquence d'émission d'un terminal précédent, si un tel terminal , existe, ou la fréquence de base elle-même.

Les moyens de positionnement d'émission du terminal considéré lui permettent d'assurer ces fonctions à l'aide des éléments précédemment indiqués sauf que les moyens de commande de position d'émission comportent pour cela des moyens de compression de pile qui peuvent être incorporés au circuit de commande de ce terminal et qui sont les suivants :
- Des moyens de positionnement initial d'émission qui sont mis en action lorsque le terminal considéré devient libre ou tout au moins avant le début d'une nouvelle communication. Ces moyens aménent la fréquence d'émission actuelle du terminal considéré au sommet de la pile des fréquences d'émission des divers terminaux.

Ils peuvent par exemple éloigner cette fréquence progressivement à partir de la fréquence d'émission précédemment utilisée jusqu'à ce qu'ils détectent l'arrivée de cette fréquence d'émission effective au sommet de la pile.
- Des moyens de détection d'appui inférieur pour détecter la présence éventuelle, parmi les ondes reçues par le terminal considéré, d'une onde externe de positionnement inférieur d'émission constituée par une dite onde externe de positionnement d'émission définissant une fréquence d'appui inférieur de ce terminal. Une telle fréquence est une dite fréquence d'appui de ce terminal à condition que cette fréquence d'appui soit plus proche de la fréquence de base que la fréquence d'émission de ce terminal. Ces moyens fournissent un signal de perte d'appui inférieur lorsqu'une telle onde externe de positionnement inférieur d'émission n'existe plus.
- Des moyens d'asservissement de position d'émission en cours de communication qui sont maintenus en action en cours de communication tant qu'existe une dite fréquence d'appui inférieur du terminal considéré. Ces moyens sont desdits moyens d'appui d'émission qui commandent la fréquence d'émission de ce terminal de la manière précédemment indiquée pour annuler ledit écart de position d'émission.
- Et des moyens de décalage d'émission qui sont mis en action en cours de communication lorsque un dit signal de perte d'appui inférieur du terminal considéré est fourni. Ces moyens rapprochent progressivement la fréquence d'émission de ce terminal de la fréquence de base jusqu'à ce ce signal de perte d'appui inférieur ne soit plus fourni.

Ce rapprochement est effectué à une vitesse de décalage qui est choisie de préférence grande. Mais cette vitesse doit être suffisamment petite pour permettre aux moyens d'asservissement de position d'émission d'un terminal suivant de suivre la variation de cette fréquence. Ceci est nécessaire parce que cette fréquence constitue la fréquence d'appui inférieur de ce terminal suivant.

On réalise ainsi une pile des fréquences d'émission des divers terminaux à partir de la fréquence de base. Ces fréquences se succèdent avec des intervalles dont beaucoup sont des intervalles normaux égaux audit incrément de fréquence. Un intervalle de fréquences accru apparaît lorsque la transmission d'un message par un terminal se termine. Dans ce cas le terminal suivant ne peut plus définir une fréquence d'appui inférieur. Il décale alors progressivement et régulièrement sa fréquence d'émission vers la fréquence de base pendant une durée de décalque qui constitue une fraction de ladite durée de communication et qui se termine soit lorsqu'une nouvelle fréquence d'appui inférieur peut être définie soit lorsque la communication est terminée. Si la vitesse de décalage de fréquence est choisie suffisamment grande, cette durée de décalage est suffisamment petite pour que l'existence des intervalles de fréquence accrus n'augmente que dans une faible proportion l'étendue nécessaire du domaine spectral du réseau.

Selon une autre disposition avantageuse, lesdits moyens de détection d'appui inférieur du terminal considéré comportent les éléments suivants :
- Des moyens de détection non sélective d'appui pour fournir un signal de perte d'appui lorsque une dite onde externe de positionnement d'émission de ce terminal n'existe plus. Ces moyens peuvent par exemple pour cela surveiller ledit signal de position d'émission qui est représentatif de la puissance du signal de battement de positionnement d'émission. Une décroissance prédéterminée telle qu'une chute rapide d'environ 50% de cette puissance indique que soit une onde externe de positionnement inférieur d'émission soit une onde externe de positionnement supérieur d'émission a disparu. Ces moyens déclenchent alors la fourniture du signal de perte d'appui.
- Et des moyens de discrimination d'appui qui sont mis en oeuvre au moins lorsque ledit signal de perte d'appui est fourni et qui fournissent alors ledit signal de perte d'appui inférieur si l'onde externe de positionnement d'émission qui a disparu était une dite onde externe de positionnement inférieur d'émission.

Les deux réseaux donnés en exemple différent l'un de l'autre quant à la structure de ces moyens de discrimination d'appui. Le premier de ces réseaux fonctionne dans le mode duplex. Il en résulte que, lorsque le terminal considéré participe à une communication, celle-ci utilise deux fréquences d'émission adjacentes et que ce terminal émet soit sur la fréquence inférieure soit sur la fréquence supérieure de la communication. Il constitue alors soit le terminal inférieur soit le terminal supérieur de la paire de terminaux en communication, respectivement, étant entendu que le terminal inférieur est celui qui précéde l'autre terminal de cette paire dans la succession des terminaux correspondant à la pile des fréquences d'émission. Dans ce premier réseau donné en exemple le terminal inférieur est le terminal appelant mais on comprendra que ce pourrait être tout aussi bien le terminal appelé.

Selon une disposition avantageuse les moyens de discrimination d'appui du terminal considéré d'un réseau fonctionnant en mode duplex enregistrent, en début de chaque communication et jusqu'à la fin de cette communication un bit de position relative représentatif du fait que le terminal considéré est appelant ou appelé et est par conséquent inférieur ou supérieur dans une paire de terminaux au cours de cette communication. Ces moyens fournissent une indication d'infériorité si ce terminal est le terminal inférieur de cette paire. Ledit signal de perte d'appui inférieur est fourni lorsque ledit signal de perte d'appui et ladite indication d'infériorité sont simultanément fournis.

Il en résulte que la paire de terminaux considérée, c'est-à-dire celle incluant le terminal considéré au cours d'une communication considérée, va décaler ses deux fréquences d'émission vers la fréquence de base si la communication précédente disparait, et au contraire que les deux fréquences d'émission de la paire considérée resteront inchangées si c'est la communication suivante qui disparait.

Il doit être compris qu'en pratique les divers moyens que comportent le circuit de commande sont avantageusement réalisés sous la forme d'éléments de programmes incorporés à ce circuit.

Selon une autre disposition avantageuse le réseau comporte un générateur de marquage pour réaliser, à un instant de marquage, un marquage préalable d'une ou plusieurs positions spectrales qui sont marquées pour être utilisées au cours d'une prochaine communication. Ces positions marquées sont des positions spectrales qui ne sont prises par aucun des terminaux du réseau à l'instant de marquage et qui doivent être prises par un ou plusieurs de ces terminaux pour réaliser la prochaine communication c'est-à-dire la première communication qui débutera sur le réseau à partir de cet instant.

Un tel marquage préalable présente l'avantage de diminuer le temps d'accès au réseau.

Le générateur de marquage peut avoir une structure analogue à celle du terminal considéré, sauf qu'aucune modulation informative n'est nécessaire sur les ondes optiques qu'il émet, puisque la seule fonction de ces ondes est de définir des fréquences.

Il comporte les éléments suivants :
- Deux fibres d'émission (B51) et de réception (52) pour le relier audit coupleur en étoile (CE) comme le terminal considéré.
- Au moins un émetteur de marquage (B2) commandable en fréquence pour émettre sur cette fibre d'émission une onde de marquage (FM1) de nature optique.

- Et des moyens de positionnement de marquage (B22, B32, B70) commandant l'émetteur de marquage pour donner à l'onde de marquage une fréquence de marquage (FM1) présentant une relation prédéterminée avec une position spectrale qui devra être prise, pour réaliser une prochaine communication, par un terminal participant à cette communication et qui est ainsi marquée par cette onde de marquage.

Cette relation prédéterminée est telle que l'onde de marquage facilite et/ou accélère le déplacement que la fréquence d'émission dudit terminal participant devra effectuer pour atteindre la position spectrale marquée.

A titre d'exemples de telles relations prédéterminées la fréquence de marquage peut coïncider avec la position marquée ou être située, par rapport à cette position marquée, à une distance spectrale prédéterminée liée au dit incrément de fréquence.

Bien entendu, lorsque le réseau comporte les moyens de compression de pile précédemment mentionnés, la ou les positions marquées par le ou les générateurs de marquage sont situées en sommet de pile comme cela apparaîtra ci-après.

Selon une autre disposition avantageuse le réseau comporte un générateur de référence de signalisation comportant lui-même :
- un émetteur de signalisation (B4) commandable en fréquence pour émettre une onde optique qui constitue une onde de référence de signalisation à une fréquence de signalisation (FZ),
- des moyens de positionnement de signalisation comportant des moyens d'asservissement de position de signalisation et des moyens de décalage de position de signalisation pour positionner ladite fréquence de signalisation dans le domaine spectral du réseau,
- une fibre d'émission (B51) pour guider ladite onde de référence de signalisation jusqu'au dit coupleur en étoile (CE),
- et une fibre de réception (B52) pour guider des ondes optiques qui ont été transmises à ce coupleur et qui sont reçues par ce générateur.

Ces moyens d'asservissement de position de signalisation sont analogues à ceux du terminal considéré et comportent les éléments suivants :
- Un mélangeur de positionnement de signalisation (B24) pour recevoir d'une part lesdites ondes reçues par le générateur de référence de signalisation et d'autre part une onde locale de positionnement de signalisation de nature optique définissant ladite fréquence de signalisation.
- Un récepteur de positionnement de signalisation (B34) alimenté par ledit mélangeur de positionnement de signalisation pour former des signaux de battement de nature électrique dont l'un est un signal de battement de positionnement de signalisation résultant du mélange de ladite onde locale de positionnement de signalisation avec une onde externe de positionnement de signalisation constituée par une dite onde reçue définissant une fréquence d'appui de signalisation qui est la fréquence la plus éloignée dans la pile desdites fréquences d'émission, la fréquence de ce signal constituant une fréquence de battement de positionnement de signalisation comprise dans un intervalle prédéterminé et représentative d'une distance spectrale entre ces fréquences de signalisation et d'appui de signalisation.
- Un discriminateur de position de signalisation non représenté pour recevoir ce signal de battement de positionnement de signalisation et pour fournir en réponse un signal de position de signalisation représentatif de la différence entre cette fréquence de battement de positionnement de signalisation et une fréquence prédéterminée.
- Et des moyens de commande de fréquence de signalisation (B70) qui commandent ladite fréquence de signalisation en réponse audit signal de position de signalisation pour asservir la distance spectrale entre cette fréquence de signalisation et ladite fréquence d'appui de signalisation à un supplément de distance spectrale prédéterminé qui constitue un supplément de signalisation.

Les moyens de décalage de position de signalisation éloignent la fréquence de signalisation lorsqu'une nouvelle communication est établie, ceci sur une distance de décalage qui est égale à un nombre d'incréments de fréquence égal au nombre des fréquences d'émission qui sont utilisées pour cette nouvelle communication.

Les moyens de positionnement d'émission du terminal considéré comportent alors en association avec son dit circuit de commande :
- des moyens de recherche de signalisation pour éloigner progressivement sa fréquence d'émission de la fréquence de base lorsque ce terminal devient libre, et pour reconnaître la coïncidence de cette fréquence d'émission avec ladite fréquence de signalisation,
- et des moyens d'asservissement d'attente commandés par ces moyens de recherche de signalisation pour asservir cette fréquence d'émission à cette fréquence de signalisation à partir du moment où une coïncidence a été reconnue entre ces deux fréquences.

Cette disposition présente l'avantage que le temps d'accès au réseau est diminué par le fait que, lorsque le terminal considéré est libre, sa position spectrale est au moins proche de celle qu'il occupera lors de sa prochaine communication.

Le circuit de commande (40) du terminal considéré comporte en outre des moyens de signalisation d'appel pour moduler ladite onde d'émission ayant ladite fréquence de signalisation par une signalisation d'appel et pour émettre cette signalisation lorsqu'un message doit être transmis par ce terminal, les fréquences de l'onde d'émission ainsi modulée occupant un canal de signalisation (KZ) ayant une largeur spectrale de signalisation.

Le terminal considéré comporte en outre des moyens de positionnement initial de réception d'attente (B70) pour amener ladite fréquence locale de ce terminal à une position spectrale dont la distance par rapport à ladite fréquence de signalisation est égale à ladite fréquence intermédiaire lorsque ce terminal est libre de manière que lesdits moyens de réception puisse ensuite recevoir des messages dans le canal de signalisation (KZ).

Lesdits moyens de positionnement d'émission du terminal considéré comportent des moyens de recherche d'émission qui sont mis en action lorsque ce terminal doit passer en émission et qui rapprochent sa fréquence d'émission de ladite fréquence de base à partir de ladite fréquence de signalisation jusqu'à une position de préémission où une dite fréquence d'appui inférieur apparaît pour ce terminal, et des moyens de recherche de réception qui sont mis en action par ce circuit de commande lorsque ce terminal doit passer en réception et qui amènent ladite fréquence locale de réception de ce terminal à une position de préréception dont la distance par rapport à une dite position de préémission d'un terminal est égale à ladite fréquence intermédiaire.

La position de préémission utilisée pour établir cette position de préréception du terminal considéré est la position de préémission de ce même terminal si la communication est réalisée en mode alternat. Si la communication est réalisée en mode duplex, la position de préémission utilisée est celle du terminal qui est apparié au terminal considéré.

Selon une autre disposition avantageuse le générateur de référence de signalisation est inclus dans un bloc de gestion BG. Ce dernier comporte en outre des moyens de réception semblables auxdits moyens de réception du terminal considéré et un circuit de commande qui est analogue audit circuit de commande du terminal considéré sauf que, d'une part, il n'a pas à assurer de communication avec un utilisateur associé, d'autre part il a à recevoir, à traiter et à émettre dans le canal de signalisation des signalisations permettant la gestion du réseau.

Selon une autre disposition avantageuse le générateur de référence de signalisation constitue un dit générateur de marquage et comporte en outre pour cela :
- au moins un émetteur de premier marquage (B2) commandable en fréquence pour émettre sur ladite fibre d'émission de ce générateur une onde de premier marquage,
- et des moyens de positionnement de premier marquage pour donner à cette onde une fréquence de premier marquage (FM1). Ces moyens sont analogues aux moyens de positionnement d'émission et comportent les éléments suivants :
- Un mélangeur de positionnement de premier marquage (B22) pour recevoir d'une part lesdites ondes reçues par le générateur de référence de signalisation et d'autre part une onde locale de positionnement de premier marquage de nature optique définissant la fréquence de premier marquage.
- Un détecteur de positionnement de premier marquage (B32) alimenté par le mélangeur de positionnement de premier marquage pour former des signaux de battement de nature électrique dont l'un est un signal de battement de positionnement de premier marquage résultant du mélange de ladite onde locale de positionnement de premier marquage avec une dite onde reçue définissant ladite fréquence d'appui de signalisation (F2P), la fréquence de ce signal constituant une fréquence de battement de positionnement de premier marquage comprise dans un intervalle prédéterminé et représentative d'un intervalle entre ces fréquences de premier marquage et d'appui de signalisation.
- Et un discriminateur de positionnement de premier marquage (non représenté) pour recevoir ce signal de battement de position de premier marquage et pour fournir en réponse un signal de position de premier marquage représentatif de la différence entre ladite fréquence de battement de positionnement de premier marquage et une fréquence prédéterminée.

Le circuit de commande (B70) du générateur de référence de signalisation commande la fréquence de premier marquage en réponse au signal d'erreur de position de premier marquage pour asservir la distance spectrale entre cette fréquence de premier marquage et la fréquence d'appui de signalisation (F2P) au dit incrément de fréquence (DF).

Lorsque le terminal considéré doit passer en réception dans le cadre d'une communication avec un autre terminal qui est positionné sur cette fréquence de premier marquage, l'onde de premier marquage permet au terminal considéré d'asservir sa fréquence locale de réception par rapport à cette fréquence de premier marquage sans avoir à attendre pour cela une émission de cet autre terminal. Si la fréquence de marquage est unique, ledit supplément de signalisation vaut avantageusement le double dudit incrément de fréquence.

Dans le cas d'un fonctionnement en mode duplex où deux canaux de message adjacents sont utilisés pour chaque communication et où le terminal considéré est le terminal supérieur, c'est-à-dire doit occuper le canal supérieur dont la fréquence porteuse est la plus éloignée de la fréquence de base, cette première fréquence de marquage constitue de plus ladite fréquence d'appui inférieur de ce terminal.

Dans ce cas une deuxième fréquence de marquage (FM2) suit la première à une distance égale audit incrément de fréquence. Une onde de deuxième marquage (B3) correspondante est émise par un émetteur de deuxième marquage muni de moyens de positionnement spectral analogues aux précédents. Elle permet le positionnement de la fréquence locale de réception du terminal supérieur et celui de la fréquence de signalisation.

Le supplément de signalisation vaut alors avantageusement le triple dudit incrément de fréquence.

Selon une autre disposition avantageuse les moyens d'asservissement de position d'émission du terminal considéré comportent en outre des moyens d'aide au positionnement spectral qui comportent aux mêmes :
- un générateur d'aide au positionnement (53) pour fournir un signal d'aide au positionnement à une fréquence d'aide au positionnement (FS) prédéterminée,
- et des moyens de modulation d'aide au positionnent (1) pour moduler au moins une fraction de l'onde d'émission du terminal considéré par ce signal d'aide au positionnement de manière à engendrer deux ondes latérales d'aide au positionnement ayant deux fréquences latérales d'aide au positionnement dont la distance spectrale à partir de la fréquence d'émission (F(2P-1)) de ce terminal est égale à ladite fréquence d'aide au positionnement (FS). Une première onde latérale a une première fréquence latérale d'aide au positionnement (F(2P-1)A) plus proche de ladite fréquence d'appui inférieur (F(2P-2)) de ce terminal que sa fréquence d'émission. Elle constitue ladite onde locale de positionnement d'émission transmise audit mélangeur de positionnement d'émission du terminal considéré.

La deuxième onde latérale d'aide au positionnement ainsi formée constitue ladite onde externe de positionnement d'émission pour le terminal suivant le terminal considéré.

La fréquence d'aide au positionnement (FS) est de préférence comprise entre le quart et la moitié dudit incrément de fréquence (DF).

Ces moyens d'aide au positionnement présentent l'avantage que la fréquence de battement de positionnement d'émission peut être très inférieure à la distance d'appui. Elle est par exemple située dans le domaine des hyperfréquences alors que la distance d'appui est sensiblement égale à l'incrément de fréquence qui est situé dans le domaine des fréquences optiques. Le signal de battement de positionnement d'émission peut alors être traité à l'aide de composants électroniques bien connus et de prix accceptable. Compte tenu de la présence ces moyens d'aide au positionnement, on comprend que lorsqu'il a été précédemment indiqué qu'une onde, un signal ou une première fréquence définissaient une deuxième fréquence ou une distance spectrale telle qu'une distance d'appui, cela signifiait que la deuxième fréquence ou distance ainsi définie était égale à la fréquence définissante agmentée ou diminuée d'une valeur prédéterminée, cette fréquence définissante étant celle de cette onde ou de ce signal ou étant cette première fréquence, cette valeur prédéterminée valent une ou deux fois la fréquence d'aide au positionnement.

Dans les deux réseaux donnés en exemple la fréquence (F(2P-1)A-F(2P-2)B) qui définit la distance d'appui (F(EP-1)-F(EP-2)) est égale à cette distance diminuée de deux fois la fréquence d'aide au positionnement (FS). Compte tenu du fait que cette distance d'appui est sensiblement égale à l'incrément de fréquence (DF), la fréquence qui définit la distance d'appui est sensiblement égale à DF-2FS.

Une autre disposition avantageuse concerne l'utilisation qui peut être faite d'un canal de signalisation qui comporte la fréquence de signalisation et l'ensemble des fréquences occupées par diverses signalisation qui sont transmises sur le réseau pour préparer et gérer les communications et plus généralement pour gérer le réseau.

Ces signalisations sont notamment les suivantes :
- Des signalisations d'appel émises par un terminal préappelant et contenant l'adresse du terminal préappelé.
- Des signalisations d'acquittement d'appel émises par le terminal préappelé en réponse à une signalisation d'appel pour indiquer au terminal préappelant que le terminal préappelé est apte à établir la communication.
- Des signalisations d'allocation de droit à communication qui sont utiles lorsque deux terminaux veulent établir simultanément deux communications sur un même canal et qui définissent alors la communication prioritaire.

L'intérêt de cette disposition apparaît lorsque beaucoup de communications, mais non leur totalité, doivent transmettre en des temps limités des messages qui comportent chacun une grande quantité d'information et que l'on peut appeler "lourds". Il s'agit alors de communications "lourdes" dont le grand débit d'information oblige à donner une grande largeur aux canaux de message alors que d'autres communications, plus "légères", ne nécessitent pas une telle largeur. Selon cette disposition le canal de signalisation est partagé entre les divers terminaux du réseau non seulement pour la transmission desdites signalisations mais aussi pour celle de messages "légers" c'est-à-dire de messages comportant chacun une quantité relativement petite d'information.

Plus précisément le terminal considéré comporte :
- des moyens de classement de messages pour indiquer si un message à transmettre est un message lourd qui doit être transmis avec un débit d'information relativement grand pendant une durée de communication relativement grande ou s'il est un message léger qui peut être transmis avec un débit d'information relativement petit et/ou pendant une durée de communication relativement petite,
- des moyens de transmission de messages lourds pour transmettre lesdits messages lourds dans lesdits canaux de message,
- et des moyens de transmission de message légers pour transmettre lesdits messages légers dans ledit canal de signalisation qui constitue alors un canal partagé entre lesdits terminaux.

Les moyens de classement de messages sont incorporés au circuit de commande 40.

Les moyens de transmission de messages lourds du terminal considéré sont les moyens qui ont été précédemment décrits et qui sont en action lorsque ce terminal est occupé. Ses moyens de transmission de messages légers sont les mêmes moyens sauf qu'ils sont mis en action par son circuit de commande alors que ce terminal est dans une situation qui a été précédemment décrite comme celle d'un terminal libre. Ils sont mis en action dans le cas où l'utilisateur associé à ce terminal souhaite émettre un message et où ce message est classé comme léger.

Cette disposition permet, sans augmenter excessivement la largeur du canal de signalisation, de diminuer sensiblement le nombre des canaux de message dans le cas où le nombre de messages lourds à transmettre par unité de temps est sensiblement plus petit que celui de l'ensemble des messages. On utilise ainsi plus efficacement le domaine spectral du réseau.

Selon une autre disposition avantageuse, la largeur du canal partagé est sensiblement égale à ladite largeur de message.

Les composants électroniques affectés à l'utilisation du canal partagé peuvent alors être sensiblement les mêmes que ceux qui sont affectés à l'utilisation des canaux de message.

Selon une autre disposition avantageuse, le canal partagé est multiplexé temporellement entre lesdits terminaux ou du moins entre ceux quine sont pas occupés à la transmission d'un message lourd, chacun de ces terminaux transmettant sur ce canal, dans le temps qui lui est affecté au cours de chaque cycle de multiplexage, les messages légers et les signalisations qu'il doit transmettre.

Un protocole d'accès au canal partagé est prévu. Il peut être semblable à des protocoles déjà connus pour l'accès à un canal de signalisation. L'allocation des droits à communication, y compris celle des droits à établir une communication lourde est réalisée d'une manière centralisée dans le bloc de gestion BG qui dialogue pour cela avec les terminaux sur le canal de signalisation. On comprendra cependant qu'une telle allocation pourrait aussi être faite d'une manière décentalisée selon laquelle les communications prioritaires seraient définies par un dialogue entre les terminaux sur le canal de signalisation.

On va maintenant donner une description plus concréte du terminal considéré appartenant au premier réseau donné en exemple. Il s'agit par exemple du terminal T1 représenté à la figure 1. Un coupleur en étoile du réseau est désigné par la référence CE.

Un émetteur 1 et un oscillateur local 2 du terminal considéré sont constitués à l'aide d'au moins deux lasers semi-conducteurs dont les fréquences sont commandées électriquement. Un courant de commande de la fréquence d'émission est fourni par lesdits moyens de positionnement d'émission à travers un circuit de régulation 41.

Un courant de commande de l'intensité optique émise comporte trois composantes :
- une composante continue de polarisation issue du circuit de régulation 41,
- une composante de modulation informative comportant des fréquences relativement basses et constituée par un signal numérique binaire représentatif des informations que l'utilisateur 50 associé à ce terminal désire transmettre. Ce signal est formé dans un circuit 52 connecté à cet utilisateur,
- et une composante de modulation d'aide au positionnement. Cette composante est sinusoïdale. Sa fréquence est plus haute que les fréquences de la composante de modulation informative et constitue une fréquence FS d'aide au positionnement. Cette troisième composante est appliquée à l'émetteur 1 par un générateur d'aide au positionnement 53.

Un interrupteur optique 34 permet d'isoler l'émetteur d'une fibre d'émission 61 pendant le positionnement du terminal. Un coupleur optique 33 prélève une partie de l'onde issue de l'émetteur pour la mélanger, grâce à un autre coupleur optique 31, aux ondes reçues sur une fibre de réception 62. Ce dernier coupleur constitue ledit mélangeur de positionnement d'émission. Le mélange d'ondes en résultant est détecté par un détecteur de positionnement d'émission 10 du type quadratique. Le signal électrique qui en résulte constitue ledit signal de battement de positionnement d'émission. Sa fréquence est mesurée par un discriminateur de position d'émission 11 qui est centré sur la fréquence DF - 2 FS. Ce discriminateur fournit un signal d'erreur de position d'émission pour l'asservissement de l'émetteur.

Un détecteur d'hétérodynage 20 détecte les ondes sortant d'un mélangeur d'hétérodynage qui est contitué par un coupleur optique 32 et qui reçoit les ondes reçues sur la fibre de réception 62 et l'onde émise par l'oscillateur local 2. Un discriminateur de fréquence et de position de réception 21, centré sur une fréquence intermédiaire FI, élabore le signal d'erreur de position de réception qui permet l'asservissement de l'oscillateur local 2. Une démodulation informative est faite à partir du signal détecté en 20. Elle est réalisée par un circuit d'amplification constituant un filtre de démodulation 22 centré sur la fréquence FI et par un régénérateur 51 restituant les données numériques en bande de base à l'utilisateur 50.

L'ensemble du terminal est géré par un circuit de commande 40 qui est constitué par un micro-circuit et qui est relié au de l'utilisateur 50 associé à ce terminal.

Le circuit 40 reçoit en entrée les signaux d'erreurs numérisés par un convertisseur analogique-numérique 43. Une mémoire 42 contient en particulier les domaines de fonctionnement des lasers de l'émetteur 1 de l'oscillateur 2, c'est-à-dire un ensemble de valeurs de courants permettant de décrire pas à pas la plage d'accord de ces lasers. Le circuit 40 élabore des signaux de consigne et les transmet à un circuit de régulation 41 qui régule les courants et températures des lasers. Il commande également l'état de l'interrupteur 34 connectant l'émetteur au coupleur en étoile CE.

Il est pour cela doté d'un logiciel constituant les moyens précédemment indiqués et assurant notamment les fonctions suivantes :
- Le calcul des courants d'accord de l'émetteur et de l'oscillateur local en fonction des signaux d'erreurs de position. Il s'agit de rendre maximal le signal issu du discriminateur 11 et d'annuler l'erreur mesurée par le discriminateur 21. La position du terminal dans la pile ou au dessus de celle-ci ne modifie en rien cet asservissement.
- La mise en oeuvre de la compression de pile, cette mise en oeuvre comprenant la détection de la disparition de la communication inférieure au vu des variations de la puissance du signal de battement de positionnement d'émission et la commande du décalage de 2xDF qui doit s'en suivre.
- La prise en compte d'informations de gestion émanant de l'utilisateur: demandes d'appels et adresse du terminal appelé, signaux d'alarmes et de sécurisation indiquant une transmission incorrecte qu'il faut interrompre pour une reprise ultérieure.
- La prise en compte des signalisations en provenance du bloc de gestion, dans le cas où le terminal est sur le canal partagé. Il s'agit en particulier de l'autorisation d'établissement d'une communication large bande c'est-à-dire d'une dite communication lourde qui doit être réalisée sur un canal de message.
- L'établissement d'une communication. S'il s'agit d'une communication lourde les fréquences des lasers doivent être diminuées à partir de la fréquence de signalisation jusqu'aux positions qu'elles occuperont en cours de communication, conformément au processus précédemment décrit.

Le réseau comporte un bloc de gestion BG qui comporte notamment le générateur de base, les générateurs de marquage et le générateur de référence de signalisation précédemment mentionnés. Conformément à la figure 3 ce bloc de gestion contient cinq lasers qui sont les suivants :
- Un générateur de base B1, stabilisé de façon absolue, émet une onde de base à une fréquence de base F0 pour constituer une référence au bas du domaine spectral du réseau.
- Deux émetteurs B2 et B3, stabilisés de façon relative, émettant les ondes de premier et de deuxième marquage pour constituer deux références de sommet de pile.
- Un émetteur de signalisation B4 et un oscillateur local B5 sont utilisés pour dialoguer avec les terminaux libres sur le canal partagé.

Un coupleur B50 permet d'injecter les ondes émises par les sources B1, B2, B3, B4 dans une fibre d'émission B51 reliée au coupleur en étoile CE.

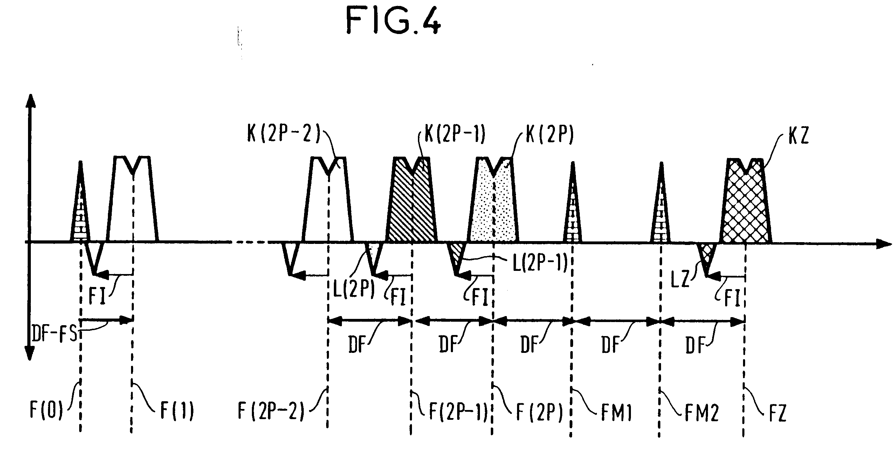

La fréquence FM1 de l'émetteur de premier marquage B2 est asservie (voir fig.4) à une distance DF au dessus du dernier canal de message K(2P). La fréquence FM2 de l'émetteur de deuxième marquage B3 est asservie à une distance DF au-dessus de la fréquence de premier marquage. La fréquence de l'émetteur de signalisation B4 est asservie à une distance DF au-dessus de la fréquence de deuxième marquage. Les émetteurs B2, B3 et B4 subissent des modulations d'aide au positionnement à la fréquence FS afin de mettre en oeuvre des asservissements identiques à celui de l'émetteur du terminal considéré. Un signal sinusoïdal à la fréquence FS est issu pour cela d'un générateur d'aide au positionnement B60.

Des coupleurs optiques B12, B13, B14 sont utilisés pour prélever des fractions des ondes émises par les émetteurs B2, B3, B4 en vue de réaliser les battements nécessaires aux asservissements. Des coupleurs B22, B23, B24, B25, assurent respectivement les mélanges suivants :
- Le mélange de l'onde de premier marquage issu de l'émetteur B2 avec le signal issu d'une fibre de réception B52 pour l'asservissement de cet émetteur.
- Le mélange de l'onde de deuxième marquage issue de l'émetteur B3 avec l'onde de premier marquage pour l'asservissement de cet émetteur.
- Le mélange de l'onde de référence de signalisation issue de l'émetteur B4 avec l'onde de deuxième marquage pour l'asservissement de cet émetteur.
- Le mélange de l'onde fournie par l'oscillateur local B5 avec le signal issu du coupleur B22 pour permettre l'asservissement de l'oscillateur local.

Des récepteurs de positionnements B32, B33, B34, B35 fournissent des signaux d'erreurs de positions E2, E3, E4, E5 pour ces quatre asservissements. Les récepteurs B32, B33 et B34 sont constitués chacun d'un détecteur quadratique et d'un filtre centré sur la fréquence DF - 2FS. Le récepteur B35 et constitué par un discriminateur de fréquence centré sur la fréquence intermédiaire FI.

Un circuit de commande B70 a les fonctions suivantes :
- Il assure les asservissements. Il reçoit pour cela en entrée les signaux de positions E2, E3, E4 et E5 pour les lasers B2, B3, B4 et B5, respectivement.
- Il met en oeuvre le protocole d'accès aux communications larges bandes en dialoguant avec les terminaux libres sur le canal de signalisation. Il reçoit des messages D5 et ces terminaux à travers un démodulateur B61. Il transmet à ces terminaux des messages D4 qui modulent en fréquence l'onde de signalisation émise par l'émetteur B4. Il peut ainsi prendre en compte les différentes demandes d'accès large bande et transmettre les autorisations d'établissement de communication.

Il augmente de 2DF les fréquences des lasers B2, B3, B4 et B5 après l'établissement d'une communication large bande de façon à marquer le nouveau sommet de pile en s'appuyant sur la dernière fréquence d'émission.

On va maintenant décrire l'établissement puis la rupture d'une communication :

La mise en relation entre deux terminaux libres se fait sur le canal de signalisation KZ. Le bloc de gestion est également présent sur ce canal. Il connaît les demandes de communications en cours, les éventuelles priorités et l'occupation du domaine spectral du réseau. En fonction de ces informations il alloue les droits à communication sur les canaux de message marqués en sommet de pile, et sur le canal partagé.

Pendant la durée du positionnement des terminaux concernés sur ces canaux, les ondes émises par ces terminaux ne doivent pas être injectées dans leurs fibres d'émission pour ne pas perturber les autres communications qui transitent par le coupleur en étoile CE. Les émetteurs sont pour cela déconnectés provisionnement de ce coupleur par les interrupteurs tels que 34.

Le terminal appelant :
- diminue la fréquence de son émetteur de 2xDF et l'asservit à DF au-dessus de la plus haute fréquence d'émission F(2P).
- diminue la fréquence de son oscillateur local de DF et l'asservit à FI au dessous de la deuxième fréquence de marquage LM2.

Le terminal appelé :
- diminue la fréquence de son émetteur de DF et l'asservit à DF au dessus de la première fréquence de marquage LM1.
- diminue la fréquence de son oscillateur local de 2xDF et l'asservit à FI au dessous de la première fréquence de marquage.

Les émetteurs sont reconnectés au coupleur en étoile et le bloc de gestion augmente les fréquences de marquage de 2xDF pour les asservir sur le nouveau sommet de pile. Tous les terminaux libres sont asservis sur ces fréquences et suivent ce mouvement.

Au moment de la rupture de la communication, les deux terminaux qui y participaient déconnectent leurs émetteurs du coupleur en étoile. Dans chacun d'eux l'oscillateur local est alors provisoirement asservi en fréquence sur l'émetteur. La fréquence de ce dernier est augmentée jusqu'au sommet de pile qu'il reconnait en détectant les deux ondes de marquage. Emetteurs et oscillateurs locaux peuvent à nouveau s'asservir sur la fréquence de signalisation. Le terminal appelant de la communication adjacente supérieure détecte la disparition de l'émission du terminal qui le précédait et décale progressivement sa fréquence d'émission de 2xDF pour combler l'espace libéré par la communication disparue. Tous les canaux supérieurs de la pile, y compris le canal de signalisation suivent ce décalage.

Les figures 4 à 9 représentent le spectre des fréquences du réseau lorsque un nombre P de communications sont en cours, le nombre 2P étant inférieur au nombre N des terminaux. Elles représentent notamment une paire supérieure de canaux qui est constituée par les canaux de message K(2P-1) et K(2P) utilisés par la paire supérieure de terminaux, c'est-à-dire par la paire de terminaux dont les fréquences d'émission F(2P-1) et F(2P) sont les plus éloignées de la fréquence de base F(0).

Ces deux canaux sont représentés avec deux types de hachures différentes, chaque type de hachures étant utilisé pour toutes les ondes émises par un même terminal et pour les signaux électriques en résultant. La paire supérieure est celle qui réalise la communication qui a été établie en dernier sur le réseau. C'est pourquoi elle occupe le sommet de la pile. Plus précisément le canal appelant K(2P-1) c'est-à-dire celui qui est utilisé par le terminal appelant constitue le canal inférieur de cette paire supérieure, ce terminal étant de même le terminal inférieur de cette paire de terminaux. De manière analogue le canal appelé K(2P) constitue le canal supérieur de cette même paire.

Les fréquences d'émission de ces deux terminaux sont représentées en F(2P-1) et F(2P) respectivement. Elles constituent des fréquences médianes de ces canaux.

Les ondes locales de réception L(2P-1) et L(2P) qui sont respectivement engendrées dans ces deux terminaux sont représentées au dessous de la ligne des abscisses, pour faciliter la compréhension du dessin. Les canaux de message occupés par d'autres terminaux sont représentés sans hachures. Il s'agit notamment du canal supérieur K(2P-2) occupé par le terminal supérieur de la paire précédant la paire supérieure.

La fréquence d'émission F(2P-2) qui est située au milieu du canal K(2P-2) constitue la fréquence d'appui inférieur pour le terminal qui occupe le canal K(2P-1). La fréquence médiane F(2P-1) de ce canal constitue la fréquence d'appui inférieur pour le terminal qui occupe le canal K(2P).

De manière générale les écarts de fréquence réalisés par le réseau sont représentés par des flèches horizontales en trait fort, la ou les pointes de la flèche désignant la ou les fréquences qui sont commandées ou prédéterminées pour réaliser ces écarts.

Les asservissements des fréquences d'émission sont généralement des asservissements bilatéraux. C'est pourquoi les flèches d'asservissement ont généralement deux pointes telles que la flèche entre les fréquences F(2P) et F(2P-1).

La fréquence d'émission F(1) qui est située au bas de la pile est asservie unilatéralement par rapport à la fréquence de base F(0). Les distances entre terminaux ainsi asservies sont égales à l'incrément de fréquence DF, la distance entre les fréquences F(1) et F(0) étant la fréquence d'aide au positionnement.

Le canal de signalisation est représenté en KZ. Les fréquences de l'onde de référence de signalisation et de l'onde locale de réception du générateur de signalisation BG sont représentées en FZ et LZ et les fréquences de premier et de deuxième marquage en FM1 et FM2, respectivement.

Les asservissements des fréquences F(2P), FM1 et FM2 sont bilatéraux. Celui de la fréquence FZ est unilatéral.

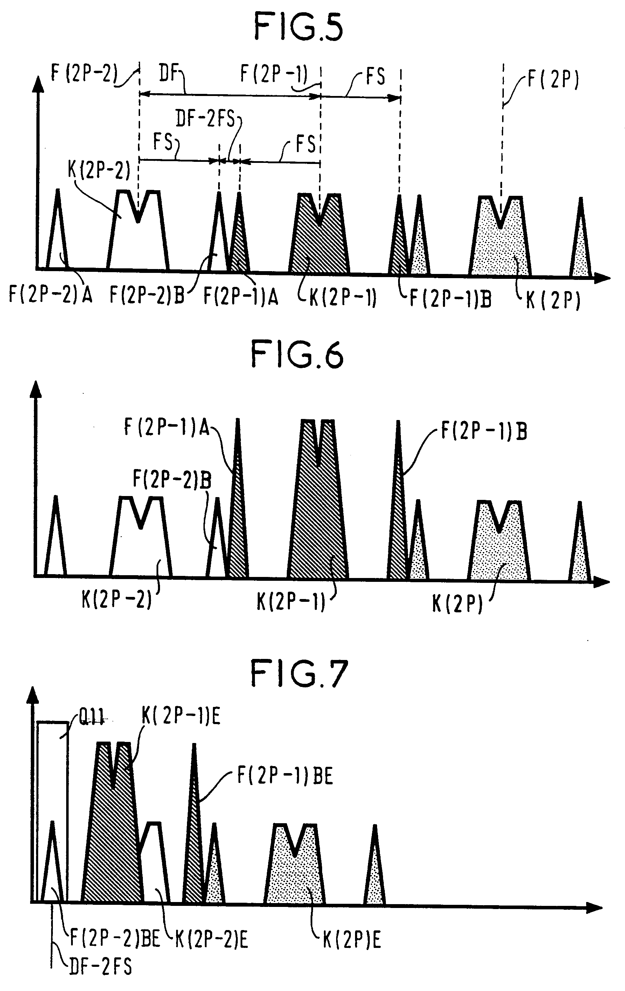

Sur la figure 5 apparaissent les canaux de message K(2P-2), K(2P-1) et K(2P) ainsi que leurs fréquences médianes F(2P-2), et F(2P-1) et F(2P). Cette figure montre de plus lesdites première et seconde fréquences latérales d'aide au positionnement F(2P-1)A et F(2P-1) B du terminal considéré qui occupe le canal K(2P-1). Ces fréquences sont respectivement égales à F(2P-1)-FS et F(2P-1)+FS.

En ce qui concerne le canal K(2P-2) les ondes homologues sont représentées en F(2P-2)A et F(2P-2)B, respectivement.

La distance d'appui inférieur F(2P-1)-F(2P-2) du terminal occupant le canal K(2P-1) est maintenue égale à l'incrément de fréquence DF grâce au fait que la différence entre les fréquences F(2P-1)A et F(2P-2)B est maintenue égale à ladite fréquence de consigne de positionnement d'émission qui vaut DF-2FS.

La figure 6 représente le spectre des mêmes ondes optiques à l'entrée du détecteur 10 du terminal considéré. Il différe de celui de la figure 5 par les intensités relatives accrues des ondes issues de l'émetteur 1, à savoir celles qui occupent le canal K(2P-1) et les fréquences latérales F(2P-1)A et F(2P-1)B.

La figure 7 représente schématiquement un spectre théorique des signaux électriques résultant de la détection de ces ondes dans le détecteur 10. La bande passante du discriminateur 11 est centrée sur la fréquence de consigne de positionnement DF-2FS et est représentée en Q11. Les signaux résultant de la détection de certaines ondes sont désignés par les références de ces ondes complétées par la lettre E. Leurs fréquences sont égales à la différence entre les fréquences de ces ondes et la première fréquence latérale d'aide au positionnement F(2P-1)A de ce terminal qui est l'une des fréquences prépondérantes par les puissances correspondantes. On comprendra que certains signaux sont omis, tels que ceux résultant de battements de diverses ondes avec le canal K(2P-1) ou avec la fréquence F(2P-1)B qui correspondent aussi à de fortes puissances. On comprendra aussi que certains signaux tels que K(2P)E sont représentés pour faciliter la compréhension mais qu'ils auraient des fréquences trop élevées pour apparaître réellement sous forme électrique en sortie du détecteur.

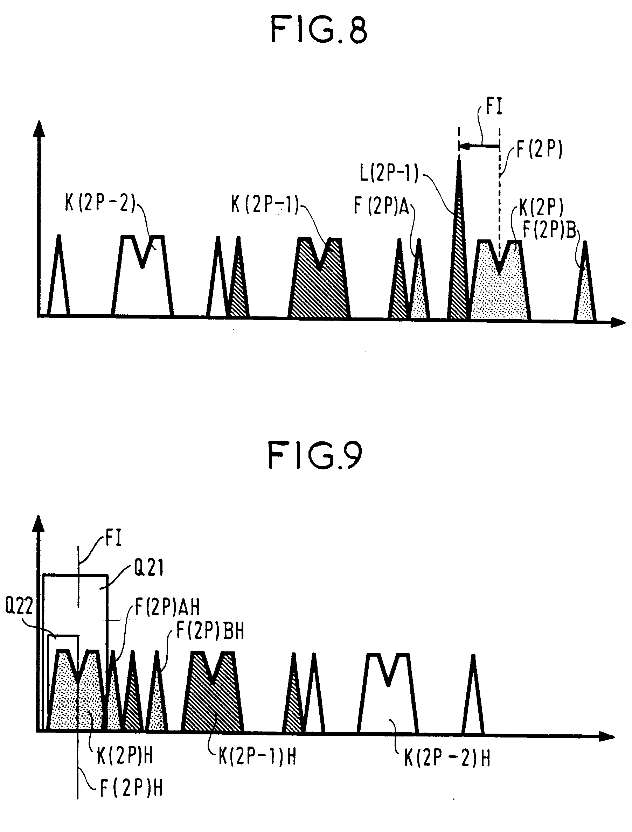

La figure 8 représente le spectre optique à l'entrée du détecteur 20 du terminal considéré. Dans ce spectre l'onde prépondérante par sa puissance est l'onde locale de réception qui provient de l'oscillateur local 2 et dont la fréquence est désignée par la référence L(2P-1) et vaut F(2P)-FI grâce à un asservissement réalisé avec l'aide du détecteur 20.

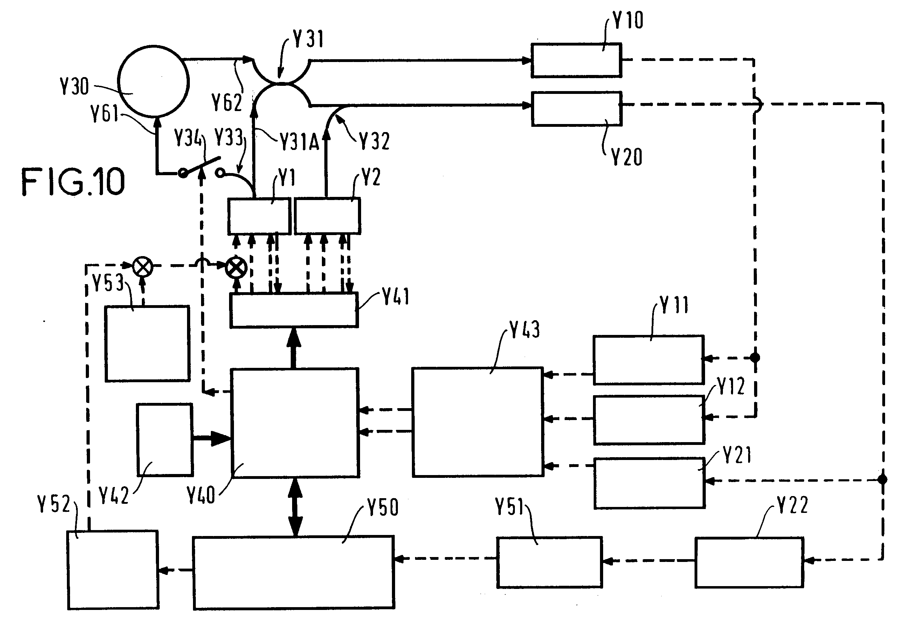

Sur la figure 9 les signaux électrique résultant de la détection de certaines de ces ondes par le détecteur 20 sont désignés par les références de ces ondes complétées par la lettre H. Leurs fréquences sont égales à la différence entre les fréquences de ces ondes et la fréquence prépondérante L(2P-1). Les mêmes remarques s'appliquent qu'à propos de la figure 7.

Les bandes passantes du discriminateur 21 et du circuit d'amplification et de filtrage 22 sont représentées en Q21 et Q22, respectivement.

On va maintenant décrire le deuxième réseau donné en exemple de mise en oeuvre de la présente invention. Ce réseau est représenté à la figure 10. Il est généralement analogue au premier précédemment décrit, sauf q'il fonctionne en mode alternat et présente, par rapport à ce premier réseau, des dispositions au moins partiellement différentes qui sont adaptées à ce mode de fonctionnement et dont certaines vont être indiquées maintenant.

De manière d'abord générale, selon une disposition avantageuse, lesdits moyens de discrimination d'appui du terminal considéré d'un réseau fonctionnant en mode alternat comportent des moyens de formation d'onde de discrimination d'appui qui sont mis en action par ledit signal de perte d'appui pour fournir à ladite entrée locale (Y31A) dudit mélangeur de positionnement d'émission (Y31) de ce terminal une onde de discrimination d'appui ayant une fréquence de discrimination d'appui qui présente, par rapport à une valeur de ladite fréquence locale de positionnement d'émission immédiatement antérieure à la formation de ce signal de perte d'appui, un écart spectral de discrimination d'appui propre à faire apparaître un écart de positionnement affectant la fréquence dudit signal de battement de positionnement d'émission, cet écart de positionnement pouvant avoir l'un ou l'autre des deux signes algébriques positif et négatif,
- ledit signal de perte d'appui inférieur étant fourni lorsque ledit écart de positionnement présente un signe algébrique prédéterminé.

Selon une autre disposition avantageuse les moyens de formation d'onde de discrimination d'appui sont des moyens pour provoquer un écart d'émission affectant provisoirement la fréquence d'émission du terminal considéré. Cet écart d'émission est par exemple positif, c'est-à-dire que la fréquence d'émission s'éloigne provisoirement un peu plus de la fréquence de base. Dans le cas où la fréquence d'aide au positionnement FS est inférieure à la moitié de l'incrément de fréquence DF, le signal de perte d'appui inférieur sera alors fourni et le décalage progressif de la fréquence d'émission vers la fréquence de base aura alors lieu si le signal de battement de positionnement d'émission subit un écart de fréquence négatif. Ce dernier peut être par exemple détecté par un circuit de commande Y40 en sortie d'un discriminateur d'appui Y12 constitué par un discriminateur de fréquence prévu à cet effet et alimenté en sortie du détecteur de positionnement d'émission Y10.

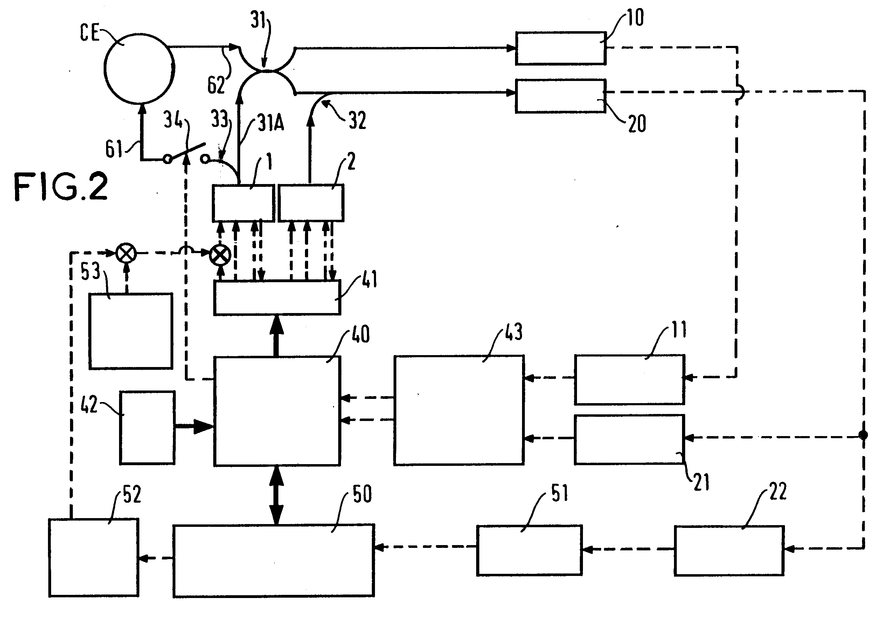

Conformément à la figure 10 le terminal considéré du réseau fonctionnant en mode alternat comporte des éléments analogues à ceux du terminal de la figure 2 sauf que le discriminateur d'appui Y12 est ajouté et que le circuit de commande Y40 est partiellement modifié. Quand deux éléments sont analogues dans ces deux terminaux, respectivement, les signes de référence qui désignent ces deux éléments sont les mêmes sauf que la lettre Y est ajoutée au début des signes de référence de l'élément du terminal de la figure 10.

## Revendications

1. Procédé de communication à allocation de fréquences dans lequel des communications sont réalisées entre des terminaux sous la forme de modulations informatives appliquées à des ondes d'émission transmises à tous ces terminaux, des fréquences centrales de ces ondes constituant des fréquences d'émission (F(1),...F(2P)), chaque communication en cours utilisant une fréquence d'émission qui lui est réservée, une fréquence d'émission étant allouée lors de chaque établissement d'une nouvelle communication à cette nouvelle communication pour lui être réservée, ce procédé étant caractérisé par le fait qu'une onde de marquage est transmise de manière prolongée à tous ces terminaux (T1,...TN) pour qu'une fréquence (FM1) soit marquée par cette onde, cette fréquence marquée constituant, lors de l'établissement de chaque nouvelle communication, ladite fréquence d'émission allouée à cette nouvelle communication, une nouvelle onde de marquage étant transmise après cet établissement.

2. Réseau de communication à allocation de fréquences, ce réseau comportant :
- une pluralité de terminaux (T1, T2, T3...TN) entre lesquels des messages doivent être transmis, chacun de ces terminaux (T1) étant apte à émettre une onde d'émission à une fréquence d'émission (F(2P-2)) commandée qui constitue une position de ce terminal dans un domaine spectral du réseau, ce terminal étant de plus apte à appliquer une modulation informative à cette onde pour lui faire porter un dit message,
- deux lignes de transmission qui sont associées à chacun desdits terminaux (T1) pour guider des ondes et qui constituent une ligne d'émission (61) pour guider ladite onde d'émission de ce terminal, et une ligne de réception (62) pour guider des ondes reçues par ce terminal,
- un coupleur en étoile (CE) pour recevoir lesdites ondes d'émission par lesdites lignes d'émission, et pour transmettre chacune de ces ondes vers tous ces terminaux par lesdites lignes de réception, de sorte que les positions des divers terminaux doivent rester à des distances mutuelles au moins égales à un incrément de fréquence prédéterminé (DF),
- et des moyens d'allocation de fréquences pour allouer à ces terminaux des positions pour les communications auxquelles ils vont participer,
- ce réseau étant caractérisé par le fait que lesdits moyens d'allocation de fréquence comportent un générateur de marquage (BG) pourvu d'une ligne d'émission (B51) le reliant audit coupleur en étoile (CE) pour fournir à tous lesdits terminaux une onde de marquage ayant une fréquence de marquage (FM1) présentant une relation prédéterminée avec une position spectrale qui est ainsi marquée pour constituer la position d'au moins un terminal pour une prochaine communication.

3. Réseau selon la revendication 2, caractérisé par le fait que ledit générateur de marquage (BG) fournit ladite onde de marquage (FM1) d'une manière permanente à une fréquence commandée, ce générateur étant pourvu d'une ligne de réception (B52) le reliant audit coupleur en étoile (CE) pour en recevoir toutes lesdites ondes d'émission, des moyens de positionnement de ce générateur comportant :
- des moyens d'asservissement de position de marquage (B22, B32, B70) pour maintenir ladite fréquence de marquage (FM1) à une distance spectrale au moins égale audit incrément de fréquence (DF) à partir de la position éventuellement variable (F(2P)) d'un dit terminal qui participe à une communication,
- et des moyens de changement de position de marquage (B70) pour changer ladite fréquence de marquage d'une manière prédéterminée lorsqu'une nouvelle communication vient d'être établie.

4. Réseau selon la revendication 2, caractérisé par le fait que ladite relation prédéterminée est que ladite fréquence de marquage est située à une distance spectrale prédéterminée de ladite position marquée,
- chacun desdits terminaux comportant au moins un mélangeur de positionnement (31, 32) pour mélanger ladite onde de marquage avec au moins une onde (F(2P-1), L(2P-1)) engendrée localement à partir d'au moins une source commandée en fréquence (1, 2) de manière à faire apparaître au moins une fréquence de battement de positionnement (F(2P-2)BE, F(2P)H),
- et des moyens de commande de fréquence (10, 11, 20, 21, 40) sensibles à ladite fréquence de battement de positionnement et commandant ladite source commandée en fréquence pour rapprocher cette fréquence d'une fréquence de consigne.

5. Réseau selon la revendication 4, dans lequel une dite source commandée en fréquence est constituée par un émetteur (1) émettant une dite onde d'émission et/ou par un oscillateur local (2) incorporé dans des moyens de réception du type hétérodyne (2, 32, 20, 22).

6. Réseau selon la revendication 2, dans lequel lesdites ondes sont des ondes optiques et lesdites lignes sont des fibres optiques.

## Claims

1. A communications method with frequency allocation in which calls are made between terminals in the form of information-carrying modulation applied to emission waves transmitted to all of the terminals, center frequencies of said waves constituting emission frequencies (F(1), ... F(2P)), each on-going call using an emission frequency which is reserved therefor, an emission frequency being allocated on each occasion that a new call is set up and being reserved for that new call, the method being characterized by the fact that a marking wave is transmitted in prolonged manner to all of the terminals (T1, ..., TN) so that a frequency (FM1) is marked by said wave, said marked frequency constituting during the setting up of each new call said emission frequency allocated to said new call, with a new marking frequency being transmitted once the call has been set up.

2. A communications network with frequency allocation, the network comprising:
a plurality of terminals (T1, T2, T3, ..., TN) associated with respective user peripherals between which messages are to be transmitted, each of the terminals (T1) being suitable for emitting an emission wave at a controlled emission frequency (F(2P-2)) which constitutes a position for said terminal in a frequency range of the network, said terminal also being suitable for applying information-carrying modulation to said wave to cause it to convey one of said messages;
two transmission lines which are associated with each of said terminals (T1) to guide waves and which constitute an emission line (61) for guiding said emission wave from said terminal and a reception line (62) for guiding the waves received by said terminal;
a star coupler (CE) for receiving said emission waves via said emission lines and for transmitting each of said waves to all of said terminals via said reception lines such that the positions of the various terminals must remain at mutual distances apart that are not less than a predetermined frequency increment (DF); and
frequency allocation means for allocating positions to said terminals for the calls in which they are to participate,
said network being characterized by the fact that said frequency allocation means comprise a marking generator (BG) provided with an emission line (B51) connecting it to said star coupler (CE) to provide all of said terminals with a marking wave having a marking frequency (FM1) having a predetermined relationship with a spectrum position which is thus marked to constitute the position of at least one terminal for the next call.

3. A network according to claim 2, characterized by the fact that said marking generator (BG) provides said marking wave (FM1) on a permanent basis at a controlled frequency, the said generator being provided with a reception line (B52) connecting it to said star coupler (CE) to receive all of said emission waves therefrom, positioning means for said generator comprising:
marking position servo-control means (B22, B32, B70) for maintaining said marking frequency (FM1) at a spectrum distance of not less than said frequency increment (DF) from the possibly variable position (F(2P)) of one of said terminals that is participating in a call; and
means (B70) for changing the marking position to change said marking frequency in a predetermined manner when a new call has just been set up.

4. A network according to claim 2, characterized by the fact that said predetermined relationship is that said marking frequency is situated at a predetermined spectrum distance from said marked position;
each of said terminals including at least one positioning mixer (31, 32) for mixing said marking wave with at least one wave (F(2P-1), L(2P-1)) generated locally from at least one frequency controlled source (1, 2) in such a manner as to cause at least one positioning beat frequency (F(2P-2)BE, F(2P)H) to appear; and
frequency control means (10, 11, 20, 21, 40) responsive to said positioning beat frequency and controlling said frequency controlled source to move said frequency towards a reference frequency.

5. A network according to claim 4, in which one of said frequency controlled sources is constituted by an emitter (1) emitting one of said emission waves and/or by a local oscillator (2) incorporated in heterodyne type reception mean (2, 32, 20, 22).

6. A network according to claim 2, in which said waves are optical waves and said lines are optical fibers.

## Patentansprüche

1. Fernmeldeverfahren mit Frequenzzuweisung, bei dem Informationen zwischen Endgeräten in Form von Informations-Modulationen ausgetauscht werden, die auf an alle Endgeräte übertragene Sendewellen angewandt werden, wobei Mittelfrequenzen dieser Wellen Sendefrequenzen (F(1), ... F(2P)) bilden und jede aktive Verbindung eine für sie reservierte Sendefrequenz verwendet und wobei eine Sendefrequenz bei jedem Aufbau einer neuen Verbindung dieser neuen Verbindung zugeteilt und für sie reserviert wird, dadurch gekennzeichnet, daß eine Markierwelle längere Zeit an alle diese Endgeräte (T1, ... TN) übermittelt wird, wobei durch diese Welle eine Frequenz (FM1) markiert wird, die beim Aufbau jeder neuen Verbindung die dieser neuen Verbindung zugewiesene Sendefrequenz wird, worauf nach diesem Verbindungsaufbau eine neue Markierwelle übertragen wird.

2. Fernmeldenetz mit Frequenzzuweisung, das aufweist:
- zahlreiche Endgeräte (T1, T2, T3, ... TN), zwischen denen Nachrichten übertragen werden sollen und die (T1) je eine Sendewelle mit einer gesteuerten Sendefrequenz (F(2P-2)) aussenden können, die einen Frequenzplatz für dieses Endgerät in einem Spektralbereich des Netzes bildet, wobei dieses Endgerät außerdem eine Information auf diese Welle aufmodulieren kann, die die zu übertragende Nachricht darstellt,
- zwei Übertragungsleitungen für jedes Endgerät (T1), die Wellen übertragen und eine Sendeleitung (61) zur Übertragung der Sendewelle dieses Endgeräts sowie eine Empfangsleitung (62) zur Übertragung der von diesem Endgerät empfangenen Wellen bilden,
- einen Sternkoppler (CE), der die von den Sendeleitungen kommenden Sendewellen empfängt und jede dieser Wellen an alle Endgeräte über die Empfangsleitungen überträgt, wobei die Frequenzplätze der verschiedenen Endgeräte gegenseitige Abstände behalten, die mindestens gleich einem vorbestimmten Frequenzinkrement (DF) sind,
- und Frequenzzuweisungsmittel, um diesen Endgeräten Frequenzplätze für die Informationsübertragungen zuzuweisen, an denen sie teilhaben werden,
dadurch gekennzeichnet, daß die Frequenzzuweisungsmittel einen Markiergenerator (BG) mit einer Sendeleitung (B51) aufweisen, der den Generator mit dem Sternkoppler (CE) verbindet, um an alle Endgeräte eine Markierwelle mit einer Markierfrequenz (FM1) zu liefern, die eine vorbestimmte Relation zu einem auf diese Weise markierten Frequenzplatz besitzt, um den spektralen Platz mindestens eines Endgeräts für eine nächste aufzubauende Verbindung zu definieren.

3. Netz nach Anspruch 2, dadurch gekennzeichnet, daß der Markiergenerator (BG) die Markierwelle (FM1) permanent mit einer gesteuerten Frequenz liefert und eine Empfangsleitung (B52) besitzt, die ihn mit dem Sternkoppler (CE) verbindet und von ihm alle Sendewellen geliefert erhält, wobei Positioniermittel dieses Generators aufweisen:
- Mittel zur Nachregelung der Markierfrequenz (B22, B32, B70), die die Markierfrequenz (FM1) auf einem spektralen Abstand mindestens gleich dem Frequenzinkrement (DF) ausgehend von dem gegebenenfalls variablen Frequenzplatz (F(2P)) eines an einer Verbindung teilhabenden Endgeräts halten,
- und Mittel (B70) zum Wechsel der Markierfrequenz, um diese in vorbestimmter Weise zu ändern, wenn eine neue Informationsverbindung aufgebaut wurde.

4. Netz nach Anspruch 2, dadurch gekennzeichnet, daß die vorbestimmte Relation darin besteht, daß die Markierfrequenz in einem vorbestimmten spektralen Abstand von der markierten Frequenz liegt, wobei jedes Endgerät mindestens eine Positionier-Mischstufe (31, 32) aufweist, um die Markierwelle mit mindestens einer Welle (F(2P-1), L(2P-1)) zu mischen, die örtlich in mindestens einer in ihrer Frequenz gesteuerten Quelle (1, 2) erzeugt wird, so daß mindestens eine Positionier-Überlagerungsfrequenz (F(2P-2)BE, F(2P)H) auftritt, und daß Frequenzsteuermittel (10, 11, 20, 21, 40) vorgesehen sind, die von der Positionier-Überlagerungsfrequenz abhängig sind und die in ihrer Frequenz gesteuerte Quelle so steuern, daß diese Frequenz einer Sollfrequenz angenähert wird.

5. Netz nach Anspruch 4, in dem eine in ihrer Frequenz gesteuerte Quelle aus einem Sender (1), der eine Sendewelle aussendet, und/oder aus einem örtlichen Oszillator (2) besteht, der in den Heterodyn-Empfangsmitteln (2, 32, 20, 22) enthalten ist.

6. Netz nach Anspruch 2, in dem die Wellen optische Wellen und die Leitungen Lichtleitfasern sind.
